(19) Europäisches Patentamt
European Patent Office
Office européen des brevets

(11) **EP 0 893 687 B1**

(12) **FASCICULE DE BREVET EUROPEEN**

(45) Date de publication et mention
de la délivrance du brevet:
**10.09.2008 Bulletin 2008/37**

(51) Int Cl.:
***G01N 27/07*** *(2006.01)*    ***F42B 17/00*** *(2006.01)*
***G01F 23/24*** *(2006.01)*

(21) Numéro de dépôt: **98401815.0**

(22) Date de dépôt: **17.07.1998**

(54) **Munition sous-marine equipée d'un détecteur d'eau**

Mit einem Wasserdetektor ausgerüstete Unterwassermunition

Underwater ammunition equipped with a water detector

(84) Etats contractants désignés:
**DE GB IT SE**

(30) Priorité: **21.07.1997 FR 9709218**

(43) Date de publication de la demande:
**27.01.1999 Bulletin 1999/04**

(73) Titulaire: **European Aeronautic Defence and
Space Company -
EADS France
75016 Paris (FR)**

(72) Inventeur: **Bogros, Serge
92140 Clamart (FR)**

(74) Mandataire: **Poulin, Gérard
BREVALEX
3, rue du Docteur Lancereaux
75008 Paris (FR)**

(56) Documents cités:
**EP-A- 0 399 824        DE-C- 968 548
DE-C- 3 201 799        FR-A- 2 531 536
FR-A- 2 588 241        GB-A- 922 709
US-A- 3 314 005        US-A- 3 939 408**

# EP 0 893 687 B1

## Description

### Domaine technique

L'invention concerne une munition sous-marine, réelle ou fictive ("maquette"), équipée d'un détecteur d'eau, conçu pour tester l'étanchéité de la munition, aussi bien lorsque le sous-marin armé de cette munition est en surface que lorsqu'il est en plongée.

Dans l'ensemble du texte, le terme "eau" désigne aussi bien l'eau pure que ses dérivés (eau peu déminéralisée, eau courante, eau de mer, etc.) ainsi que tout liquide présentant une conductivité comparable.

### Etat de la technique

Une munition sous-marine, prévue pour être tirée depuis un sous-marin en plongée, se compose habituellement d'un véhicule sous-marin servant uniquement de véhicule intermédiaire ; il contient un missile aérien dans une structure étanche et résistante de forme générale très proche de celles des torpilles. A bord du sous-marin, la munition est placée dans un tube lance-torpilles étanche, normalement fermé par deux portes (Porte de tube de lancement et porte d'étrave).

Lorsque la munition est mise en place, elle est remplie d'azote sous pression. Elle est donc dépourvue d'humidité.

Après un stockage aérien de longue durée (1 an, ... 10 ans, ou plus), l'étanchéité de la munition peut devenir défaillante. Etant donné que la porte d'étrave est toujours en immersion, de l'eau pénètre dans le tube de lancement contenant la munition lorsque la porte d'un tube lance-torpilles est ouverte, avant un tir. Dans le cas d'une défaillance d'étanchéité il est alors indispensable d'interdire le tir, de démonter la munition et de rechercher l'origine de la fuite afin de la réparer, si cela est possible.

Avant qu'un tir soit effectué, il est donc nécessaire de vérifier l'étanchéité de la munition. A cet effet, il est connu d'équiper la munition d'un détecteur d'eau comprenant une sonde placée dans l'espace annulaire formé entre le missile et son tube de protection et fixée à ce tube.

Les sondes utilisées actuellement à cet effet comprennent deux électrodes placées en vis-à-vis l'une de l'autre dans le bas de l'espace annulaire précité. La conception de ces électrodes est telle que la sonde n'effectue pas réellement une mesure de résistivité du fluide situé entre les électrodes. Par conséquent, dès que quelques gouttelettes d'humidité sont présentes entre les électrodes pour une raison quelconque, qui peut être totalement indépendante de la présence d'une fuite dans la munition, le détecteur émet inopinément un signal d'interdiction de tir. En effet, les gouttelettes d'humidité peuvent avoir pour origine de l'humidité due aux variations de température à l'intérieur de la munition ou des gouttelettes d'un liquide de lestage utilisé dans les Détecteur d'eaus factices, ou "maquettes".

Inversement, les dépôts d'impuretés (graisse, etc.) qui peuvent se produire au fil du temps sur les surfaces des électrodes, peuvent conduire la sonde à ne pas détecter un défaut d'étanchéité de la munition. Les détecteurs d'eau existants présentent donc une fiabilité très aléatoire, et cela d'autant plus que la durée de stockage précédant un tir s'allonge.

### Exposé de l'invention

L'invention a pour objet une munition sous-marine comprenant un détecteur d'eau équipé d'une sonde permettant de mesurer la résistivité de l'eau avec précision et quel que soit le temps de stockage, ce qui donne au détecteur une grande fiabilité et évite aussi bien les détections intempestives que les défauts de détection.

Conformément à l'invention ce résultat est obtenu au moyen d'une munition sous-marine, comprenant un engin placé dans un tube de protection étanche, caractérisée par le fait qu'elle comprend un détecteur d'eau incluant une sonde de mesure de la résistivité comprenant une électrode centrale et une électrode extérieure cylindriques et coaxiales, délimitant entre elles un espace annulaire présentant une extrémité ouverte et des trous formés dans l'électrode extérieure de façon à déboucher dans ledit espace annulaire, ladite sonde étant placée dans le bas d'un espace annulaire délimité entre l'engin et le tube de protection, de telle sorte que ladite extrémité ouverte soit orientée vers le bas, les surfaces des électrodes extérieure et centrale étant rugueuses et platinées.

Dans une forme de réalisation préférée de l'invention, l'électrode centrale est en retrait d'une distance déterminée, comprise par exemple entre environ 1,1 mm et environ 1,3 mm, par rapport à l'électrode extérieure, à l'extrémité ouverte de l'espace annulaire délimité entre les deux électrodes.

Les deux électrodes de la sonde peuvent notamment être réalisées en un matériau inoxydable et résistant aux agressions, notamment chimiques, des produits environnants, tel que l'acier inoxydable.

Par ailleurs, un matériau électriquement isolant est placé dans une région d'extrémité de l'espace annulaire, opposée à l'extrémité ouverte de cet espace. Ce matériau est, par exemple, du polytétrafluoréthylène.

Dans une forme de réalisation non limitative de l'invention, les trous sont formés sensiblement à mi-longueur

**2**

de l'électrode extérieure, et régulièrement répartis autour de l'axe commun aux électrodes.

Les extrémités des électrodes extérieure et centrale opposées à l'extrémité ouverte de l'espace annulaire sont fixées sur un support de sonde électriquement isolant, que traversent deux fils de liaison électrique reliant deux bornes d'un connecteur électrique aux électrodes extérieure et centrale.

Le détecteur d'eau comprend de plus un circuit électronique incluant une source de tension alternative et des moyens de mesure de courant, connectés en série entre les électrodes extérieure et centrale de la sonde.

A titre d'exemple non limitatif, la source de tension alternative délivre une tension de 19,8 veff monophasée à une fréquence de 400 Hz et elle comprend avantageusement un transformateur.

## Brève description des dessins

On décrira à présent, à titre d'exemple non limitatif, une forme de réalisation préférée de l'invention, en se référant aux dessins annexés, dans lesquels :

- la figure 1 est une vue de côté qui représente très schématiquement un tube lance-torpilles dans lequel est placée une munition sous-marine équipée d'un détecteur d'eau conforme à l'invention ; et
- la figure 2 représente le détecteur d'eau conforme à l'invention, la sonde de mesure de résistivité de ce détecteur étant illustrée en coupe verticale.

## Description détaillée d'une forme de réalisation préférée.

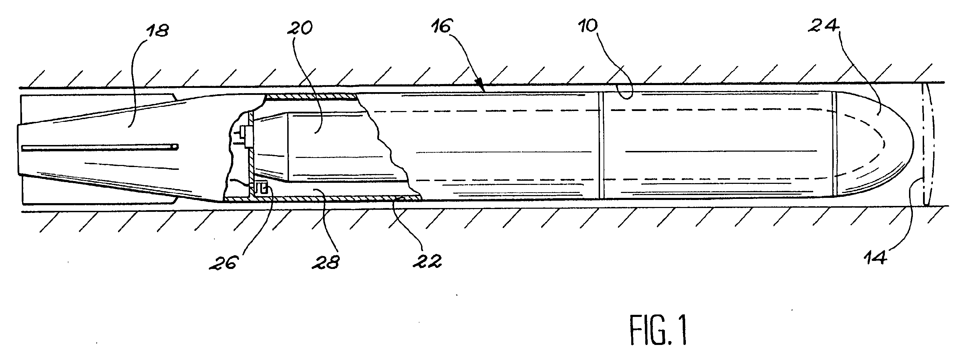

Sur la figure 1, la référence 10 désigne un tube lance-torpilles équipant un sous-marin. A son extrémité débouchant dans l'eau, ce tube lance-torpilles est normalement obturé par une porte (non représentée). Derrière cette porte est placée un opercule non étanche 14. Cet opercule a pour fonction d'éviter une entrée trop brutale de l'eau dans le tube lance-torpilles 10 lors de l'ouverture de la porte.

En arrière de l'opercule 14, le tube lance-torpilles 10 contient une munition sous-marine 16. Cette munition 16 inclut un propulseur sous-marin constitué par une torpille 18, ainsi qu'un engin tel qu'un missile 20 placé devant la torpille. Le missile 20 est entouré d'un tube de protection 22 fermé à son extrémité avant par une ogive 24.

Une munition de ce type est prévue pour être tirée à partir d'un sous-marin en plongée. Tant que la munition se trouve dans l'eau, la propulsion est assurée par la torpille 18. Le missile 20 est ensuite mis à feu, séparé de la torpille 18 et débarrassé de son ogive 24 et de son tube de protection 22, afin d'effectuer la mission qui lui est confiée jusqu'à sa cible dans l'atmosphère.

Avant d'effectuer un tir à l'aide d'une telle munition, on doit vérifier l'étanchéité de celle-ci et notamment de l'ensemble assurant la protection du missile 20 lors de la partie sous-marine de sa trajectoire, cet ensemble de protection étant constitué par le tube de protection 22 et l'ogive 24. En effet, toute entrée d'eau intempestive dans la munition risque de se traduire par un dysfonctionnement du missile.

A cet effet, un détecteur d'eau est généralement associé à chaque Détecteur d'eau sous-marine 16. Ce détecteur d'eau comprend notamment, conformément à l'invention, une sonde 26 de mesure de résistivité, placée dans le bas de l'espace 28 délimité entre le missile 20 et son tube de protection 22. Pour des raisons pratiques, la sonde 26 est généralement implantée à l'arrière de l'espace 28, comme l'illustre schématiquement la figure 1.

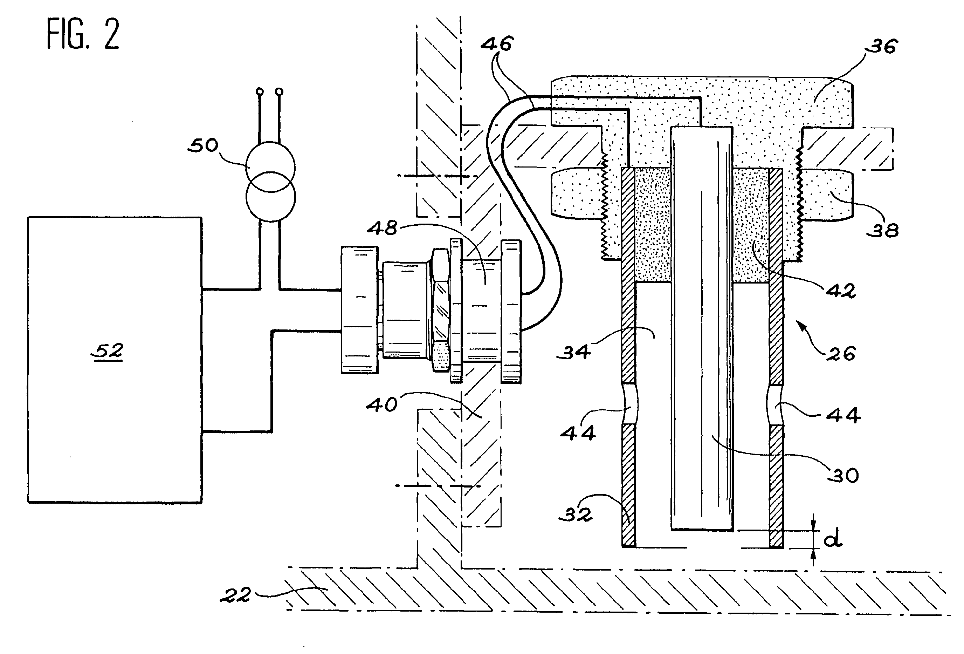

Comme l'illustre plus en détail la figure 2, la sonde 26 de mesure de résistivité comprend une électrode centrale cylindrique pleine 30 et une électrode extérieure cylindrique creuse 32, disposées coaxialement selon un axe vertical, de telle sorte que l'électrode centrale 30 soit placée à l'intérieur de l'électrode extérieure 32.

Les électrodes 30 et 32 sont réalisées de préférence en acier inoxydable et elles présentent des surfaces extérieures rugueuses et platinées.

L'électrode centrale 30 et l'électrode extérieure 32 délimitent entre elles un espace annulaire 34 fermé à son extrémité supérieure et ouvert à son extrémité inférieure, située à proximité immédiate de la partie basse du tube de protection 22.

Les dimensions des électrodes 30 et 32, et en particulier les diamètres de ces électrodes, sont choisies en fonction de la sensibilité que l'on désire obtenir pour la sonde, c'est-à-dire du niveau de résistivité que l'on souhaite pouvoir détecter.

Ainsi, si l'on désigne par L (en cm) la longueur commune des deux électrodes cylindriques 30 et 32 et respectivement par R1 et R2 (en cm) les rayons de l'électrode centrale 30 et de l'électrode extérieure 32, et si l'on appelle $\rho$ (en $\Omega$.cm) la résistivité du fluide susceptible d'être reçu entre ces électrodes, à la température considérée, la résistance R (en $\Omega$) du fluide présent entre les deux électrodes est donnée par la relation :

EP 0 893 687 B1

$$R = \frac{\ell n(R2 / R1)}{2\pi \cdot L} \rho \qquad . \qquad (1)$$

Il ressort de la relation (1) que les dimensions de la colonne de liquide présente entre les deux électrodes sont très importantes pour la détermination de la résistance R. Ainsi, on définit une constante de cellule C (en cm$^{-1}$) telle que :

$$C = \frac{\ell n(R2 / R1)}{2\pi \cdot L} \qquad . \qquad (2)$$

Compte tenu de la valeur moyenne de la résistivité ρ ou de la conductivité γ du liquide que l'on désire détecter, on donne à la constante de cellule C une valeur adaptée, égale par exemple à 0,1 cm$^{-1}$. Compte tenu de la relation (2), cette valeur de la constante de cellule C est obtenue, par exemple, pour une hauteur d'immersion L des électrodes dans le fluide égale à 1 cm, si l'on donne aux rayons R1 et R2 des valeurs respectivement égales à 2,0 cm et 4,5 cm.
La valeur de la constante de cellule déterminée par ce dimensionnement des électrodes permet d'éviter des détections intempestives en présence de gouttelettes d'eau ou de poussières conductrices.
Compte tenu des relations (1) et (2), la résistance spécifique R du fluide emprisonné dans la cellule peut être exprimée par la relation suivante :

$$R = C.\rho \qquad , \qquad (3)$$

ou, sachant que la résistivité ρ (en Ω.cm) est égale à l'inverse de la conductivité γ (en S/cm) :

$$R = C/\gamma \qquad . \qquad (4)$$

A leurs extrémités prévues pour être orientées vers le haut, les deux électrodes 30 et 32 sont fixées sur un support de sonde 36 électriquement isolant. Ce support de sonde 36 est équipé d'un écrou de fixation 38 permettant de monter la sonde sur une platine 40. Cette platine 40 est elle-même fixée, par exemple au moyen de vis (non représentées) dans le bas du tube de protection 22 du missile 20.
Un matériau 42 électriquement isolant, tel que du polytétrafluoréthylène, est placé dans la région d'extrémité supérieure de l'espace annulaire 34, qui est donc fermé vers le haut.
Comme l'illustre schématiquement la figure 2, au moins deux trous 44 sont usinés dans l'électrode extérieure 32 de la sonde 26. Ces trous 44 ont principalement pour fonction de permettre la circulation de l'eau à l'intérieur de la sonde, nécessaire à la mesure. A cet effet, les trous 44 débouchent dans l'espace annulaire 34, en dessous de la région d'extrémité de cet espace dans laquelle est placé le matériau 42 électriquement isolant.
A titre d'exemple et de façon nullement limitative, quatre trous 44, de forme circulaire, sont régulièrement répartis autour de l'axe vertical commun aux deux électrodes, et ces trous 44 sont situés sensiblement à mi-longueur de l'électrode extérieure 22.
Par ailleurs, à l'extrémité ouverte de l'espace annulaire 34, normalement orientée vers le bas, l'extrémité de l'électrode centrale 30 est située en retrait d'une distance d déterminée par rapport à l'extrémité de l'électrode extérieure 32. Cette caractéristique permet notamment d'assurer la stabilité du champ de polarisation des électrodes. Elle supprime aussi le risque d'obturation de l'espace annulaire 34 par des gouttelettes d'eau et le contact intempestif de corps étranger avec l'électrode centrale 30.
Dans la pratique, la distance d séparant l'extrémité inférieure de l'électrode centrale 30 de l'extrémité inférieure

4

de l'électrode extérieure 32 est comprise de préférence entre environ 1,1 mm et environ 1,3 mm.

Le support de sonde 36 est traversé par deux fils de liaison électrique 46, qui relient les deux bornes d'un connecteur électrique 48 aux électrodes extérieure 32 et centrale 30.

Comme l'illustre la figure 2, le connecteur électrique 48 permet de relier la sonde 26 à un circuit électronique incluant une source 50 de tension alternative et des moyens 52 de mesure de courant, connectés en série entre les électrodes extérieure 32 et centrale 30 de la sonde.

La source 50 de tension alternative est constituée par un transformateur qui délivre une tension monophasée alternative, assurant la circulation d'un courant électrique peu élevé lorsque de l'eau est présente entre les électrodes de la sonde 26. Le caractère peu élevé de ce courant évite la polarisation des électrodes. De plus, l'utilisation d'un courant alternatif permet de supprimer les effets perturbateurs qui tendent à apparaître au niveau des électrodes. En effet, les modifications apportées à l'environnement de chaque électrode pendant une alternance sont détruites lors de l'alternance suivante.

Dans la pratique et uniquement à titre d'exemple, le transformateur 50 peut délivrer une tension de 19,8 Veff monophasée à une fréquence de 400 Hz.

Les moyens 52 de mesure de courant qui sont connectés en série avec le transformateur 50, entre les électrodes extérieure 32 et centrale 30 de la sonde, détectent le courant électrique qui circule dans le circuit et le comparent à un seuil prédéterminé, afin d'interdire le lancement de la munition 16 dès que ce seuil est dépassé. Ils peuvent être constitués par tout moyen électronique approprié, adapté à l'application envisagée. A titre d'exemple nullement limitatif, ces moyens 52 de mesure de courant comprennent par exemple un optocoupleur constitué d'une diode électroluminescente (infrarouge) faisant office d'émetteur de lumière et d'un phototransistor au silicium faisant office de récepteur et servant d'interface logique.

Lorsqu'une tension alternative monophasée est appliquée dans le circuit par le transformateur 50, un courant électrique est engendré dans le circuit. La valeur de ce courant, mesurée par les moyens 52 de mesure de courant, dépend de la résistance de l'eau éventuellement présente entre les électrodes de la sonde. Elle est donc représentative de la résistivité de l'eau susceptible d'être contenue dans l'espace 34 interélectrode. La comparaison de ce courant électrique avec un seuil prédéterminé, choisi en fonction de la constante de cellule C et de la résistivité de l'eau, permet donc de détecter de façon sûre la présence d'un volume minimal d'eau à l'intérieur du tube de protection 22, révélatrice d'un défaut d'étanchéité. Le tir de la munition n'a alors pas lieu.

Il est à noter que l'utilisation d'une sonde 26 dont les électrodes présentent des surfaces rugueuses et platinées permet d'effectuer des mesures de résistivité représentatives, avec une bonne précision, de la résistivité réelle de la colonne de liquide présente à l'intérieur de l'espace interélectrode, quelle que soit la hauteur de cette colonne.

Ces caractéristiques du détecteur d'eau conforme à l'invention ont été vérifiées expérimentalement en suivant la méthode qui va à présent être exposée.

Au cours d'une première opération, on a mesuré la conductivité électrique $\gamma$ (en $\mu$S/m) de l'eau pure et de ses dérivés, ainsi que celle d'un liquide de lestage susceptible d'être contenu dans une munition factice, ou "maquette". On a aussi mesuré la température T(en °C). Les mesures de conductivité ont été effectuée à l'aide d'un conductivimètre "HI 3291 ATC Conductivity Probe de HANNA Instrument". Les résultats de ces mesures sont donnés dans le Tableau I.

Tableau I

| Nature du fluide | Conductivité $\gamma$(en $\mu$ S/m) | Température T (en °C) |
|---|---|---|
| eau pure | 3 | 15 |
| eau peu déminéralisée | 170 | 15 |
| eau courante | 580 | 17 |
| liquide de lestage | 410 | 17 |
| eau de mer contenant 4 % de sel | 6400 | 18 |

Au cours d'une deuxième étape, on a calculé la résistance R théorique du fluide contenu entre les deux électrodes de la sonde 26, en fonction de l'immersion des électrodes, en appliquant la relation (4). Les résultats de ces calculs sont donnés dans le Tableau II, dans le cas de l'eau courante (conductivité : 580 $\mu$S/m à 16,7°C; résistivité : 1,7241 k$\Omega$).

**Tableau II**

| Hauteur d'immersion L (en mm) | R Théorique -10 % (en kΩ) | R Théorique (en kΩ) | R Théorique + 20 % (en kΩ) |
|---|---|---|---|
| 0,2 | 10,01 | 11,12 | 13,348 |
| 1 | 2,00 | 2,22 | 2,669 |
| 2 | 1,00 | 1,112 | 1,334 |
| 3 | 0,67 | 0,741 | 0,889 |
| 4 | 0, 50 | 0,556 | 0,667 |
| 5 | 0,40 | 0,444 | 0,533 |
| 6 | 0,33 | 0,370 | 0,444 |
| 7 | 0,29 | 0,317 | 0,381 |
| 8 | 0,25 | 0,278 | 0,333 |
| 9 | 0,22 | 0,247 | 0,296 |
| 10 | 0,20 | 0,222 | 0,266 |
| 15 | 0,13 | 0,148 | 0,177 |

Le Tableau II donne aussi les valeurs de la résistance R théorique augmentée de 20 % et diminuée de 10 %, qui fixent les limites d'erreur acceptables pour la mesure. Ces valeurs sont calculées par un logiciel approprié.

Au cours d'une troisième étape, des mesures ont été effectuées à l'aide de la sonde 26 conforme à l'invention, en reliant celle-ci à un résistivimètre type "1001 CT de la Société BAMO" et en immergeant progressivement la sonde dans différents fluides, en partant du bas des électrodes, par pas de 1 mm. Les résultats obtenus dans le cas de l'eau courante, à partir d'un lot de trois sondes de fabrication identique dont les électrodes présentaient des surfaces lisses et non platinées, n'ont pas donné satisfaction. On a eu l'idée de rendre rugueuses les surfaces des électrodes et de les revêtir de platine. Les résultats sont donnés dans le Tableau III.

**Tableau III**

| Hauteur d'immersion L (en mm) | R Sonde 1 (en kΩ) | R Sonde 2 (en kΩ) | R Sonde 3 (en kΩ) |
|---|---|---|---|
| 0,2 | 0,62 | 0,87 | 0,57 |
| 1 | 0,415 | 0,55 | 0,511 |
| 2 | 0,39 | 0,46 | 0,44 |
| 3 | 0,34 | 0,37 | 0,36 |
| 4 | 0,31 | 0,32 | 0,36 |
| 5 | 0,276 | 0,31 | 0,32 |
| 6 | 0,24 | 0,28 | 0,27 |
| 7 | 0,24 | 0,26 | 0,26 |
| 8 | 0,24 | 0,22 | 0,24 |
| 9 | 0,20 | 0,22 | 0,22 |
| 10 | 0,20 | 0,21 | 0,22 |
| 15 | 0,20 | 0,21 | 0,22 |

La comparaison de ces résultats avec les calculs théoriques (Tableau II) montre que les mesures diffèrent nettement des valeurs théoriques attendues, dans le cas de faibles immersions (inférieures à 3 mm). En revanche, au-delà de cette hauteur d'immersion, il y a une bonne coïncidence entre les deux valeurs.

Les erreurs observées à faible immersion peuvent s'expliquer à la fois par des effets de capillarité qui ont tendance à augmenter les surfaces de contact entre le liquide et les parois des électrodes et par des effets de bord qui créent des surtensions de champ aux extrémités des électrodes.

Afin de limiter au mieux ces deux effets, on a eu une deuxième idée de composer un cycle de lavage qui comprend :

- un trempage de la sonde platinée dans une eau chaude (+ 55 à 65°C) additionnée d'un produit de vaisselle, pendant 10 minutes environ,
- un rinçage dans un jet d'eau douce.

Les résultats des mesures effectuées ensuite sur trois sondes platinées ainsi modifiée deviennent conformes à la théorie, y compris dans le cas de faibles hauteurs d'immersion.

Cette idée de cycle de lavage après platinage permet aussi de garantir l'état de surface des électrodes dans le temps de stockage, lequel conditionne la vraie répétitivité des résultats des mesures effectuées dans le cadre des cycles de températures ont permis de constater une répétitivité correcte.

Enfin, une sonde 26 conforme à l'invention a ensuite été reliée au circuit électronique du détecteur d'eau et implantée sur une munition. On a ainsi vérifié le bon fonctionnement de cinq sondes conformes à l'invention, immergées progressivement dans de l'eau de conductivité 579 $\mu$ S/m à environ 19°C. Dans tous les cas, un franchissement du seuil de déclenchement de la fonction "interdiction de tir" a été observé dans des conditions totalement identiques.

Ces essais ont permis de démontrer que le détecteur d'eau selon l'invention est capable de capter et de garder en mémoire le passage d'un dépôt d'eau ou de liquide de lestage anormalement présent dans le tube protecteur 22. Ces sondes réalisent donc une fonction de mémoire et, de ce fait, elles permettent de signaler préventivement une avarie. La mise à eau du tube lance-torpilles peut ainsi être interdite de façon sûre, fiable et reproductible.

**Revendications**

1.  Munition sous-marine, comprenant un engin (20) placé dans un tube de protection étanche (22), **caractérisée par le fait qu'**elle comprend un détecteur d'eau incluant une sonde (26) de mesure de la résistivité, comprenant une électrode centrale (30) et une électrode extérieure (32) cylindriques et coaxiales, délimitant entre elles un espace annulaire (34) présentant une extrémité ouverte et des trous (44) formés dans l'électrode extérieure (32) de façon à déboucher dans ledit espace annulaire, ladite sonde (26) étant placée dans le bas d'un espace annulaire (28) délimité entre l'engin (20) et le tube de protection (22), de telle sorte que ladite extrémité ouverte soit orientée vers le bas, les surfaces des électrodes extérieure (32) et centrale (30) étant rugueuses et platinées.

2.  Munition selon la revendication 1, dans lequel, à ladite extrémité ouverte de l'espace annulaire (34), l'électrode centrale (30) est en retrait d'une distance déterminée par rapport à l'électrode extérieure (32).

3.  Munition selon la revendication 2, dans lequel la distance déterminée est comprise entre environ 1,1 mm et environ 1,3 mm.

4.  Munition selon l'une quelconque des revendications 1 à 3, dans lequel les électrodes extérieure (32) et centrale (30) rugueuses et platinées sont trempées, puis rincées.

5.  Munition selon l'une quelconque des revendications précédentes, dans lequel les électrodes extérieure (32) et centrale (30) sont réalisées en acier inoxydable.

6.  Munition selon l'une quelconque des revendications précédentes, dans lequel un matériau (42) électriquement isolant est placé dans une région d'extrémité de l'espace annulaire (34), opposée à ladite extrémité ouverte.

7.  Munition selon la revendication 6, dans lequel le matériau électriquement isolant est du polytétrafluoréthylène.

8.  Munition selon l'une quelconque des revendications précédentes, dans lequel les trous (44) sont formés sensiblement à mi-longueur de l'électrode extérieure (32), et régulièrement répartis autour de l'axe commun aux électrodes extérieure et centrale.

9.  Munition selon l'une quelconque des revendications précédentes, dans lequel les extrémités des électrodes extérieure (32) et centrale (30) opposées à ladite extrémité ouverte sont fixées sur un support de sonde (36) électriquement isolant, que traversent deux fils de liaison électrique (46) reliant deux bornes d'un connecteur électrique (48) aux électrodes extérieure et centrale.

10. Munition selon l'une quelconque des revendications précédentes, comprenant de plus un circuit électronique incluant une source de tension alternative (50) et des moyens (52) de mesure de courant, connectés en série entre les électrodes extérieure (32) et centrale (30) de la sonde (26).

11. Munition selon la revendication 10, dans lequel la source de tension alternative (50) délivre une tension de 19,8 Veff monophasée à une fréquence de 400 Hz.

12. Munition selon l'une quelconque des revendications 10 et 11, dans lequel la source de tension alternative comprend un transformateur (50).

**Claims**

1. Submarine ammunition, comprising an engine (20) placed in a watertight protective tube (22), **characterised in that** it contains a water detector including a probe (26) for measuring resistance, comprising a central electrode (30) and an external electrode (32), each cylindrical and coaxial, marking out between them an annular space (34) presenting an open end and holes (44) formed in the external electrode (32) so as to exit into the annular space, the said probe (26) being positioned in the lower part of an annular space (28) marked out between the engine (20) and the protective tube (22), so that the said open end is pointed downwards, the surfaces of the external (32) and central (30) electrodes being rough and platinum plated.

2. Ammunition according to Claim 1, in which, at the open end of the annular space (34), the central electrode (30) is retracted a predetermined distance with respect to the external electrode (32).

3. Ammunition according to Claim 2, in which the predetermined distance is between approximately 1.1 mm and approximately 1.3 mm.

4. Ammunition according to any of Claims 1-3, in which the external (32) and central (30) electrodes, rough and platinum plated, are dipped and then rinsed.

5. Ammunition according to any of the previous claims, in which the exterior (32) and central (30) electrodes are made of stainless steel.

6. Ammunition according to any of the previous claims, in which an electrically insulating material (42) is arranged in a location at the end of the annular space (34), opposite the open end.

7. Ammunition according to Claim 6, in which the electrically insulating material is polytetrafluoroethylene.

8. Ammunition according to any of the previous claims, in which the holes (44) are arranged substantially on the mid-length of the exterior electrode (32) and regularly spaced around the axis common to the external and central electrodes.

9. Ammunition according to any of the previous claims, in which the ends of the external (32) and central (30) electrodes opposite to the open end are fixed to an electrically insulating probe support (36), crossed by two electrical connecting wires (46) linking two terminals in an electrical connector (48) to the external and central electrodes.

10. Ammunition according to any of the previous claims, comprising in addition an electronic circuit that includes an alternative voltage source (50) and means (52) for measuring the current, connected in series between the external (32) and central (30) electrodes in the probe (26).

11. Ammunition according to Claim 10, in which the alternative voltage source (50) provides a voltage of 19.8 Veff in monophase at a frequency of 400 Hz.

12. Ammunition according to either of Claims 10 or 11, in which the alternative voltage source comprises a transformer (50).

**Patentansprüche**

1.  Unterwassermunition mit einer in einem dichten Schutzrohr (22) angeordneten Rakete (20), **dadurch gekennzeichnet, dass** sie einen Wasserdetektor umfasst, der eine Sonde (26) zum Messen der Widerstandsfähigkeit enthält, umfassend eine zentrale Elektrode (30) und eine äußere Elektrode (32), die zylindrisch und koaxial sind und untereinander einen ringförmigen Zwischenraum (34) festlegen, der ein offenes Ende aufweist, sowie Löcher (44), die in der äußeren Elektrode (32) so ausgebildet sind, dass sie in den ringförmigen Zwischenraum münden, wobei die Sonde (26) unter dem von der Rakete (20) und dem Schutzrohr (22) festgelegten ringförmigen Zwischenraum so angeordnet ist, dass das offene Ende nach unten gerichtet ist, wobei die Oberflächen der äußeren (32) und zentralen (30) Elektroden rauh und platiniert sind.

2.  Munition nach Anspruch 1, wobei an dem offenen Ende des ringförmigen Zwischenraums (34) die zentrale Elektrode (30) um einen bestimmten Abstand in Bezug auf die äußere Elektrode (32) zurückversetzt ist.

3.  Munition nach Anspruch 2, wobei der bestimmte Abstand zwischen etwa 1,1 Millimeter und etwa 1,3 Millimeter liegt.

4.  Munition nach einem der Ansprüche 1 bis 3, wobei die rauhe und platinierte Außenelektrode (32) und zentrale Elektrode (30) im Tauchverfahren gehärtet und dann gespült werden.

5.  Munition nach einem der vorangehenden Ansprüche, wobei die äußere (32) und zentrale (30) Elektrode aus rostfreiem Stahl hergestellt sind.

6.  Munition nach einem der vorangehenden Ansprüche, wobei ein elektrisch isolierendes Material (42) in einem Endbereich des ringförmigen Zwischenraums (34) gegenüber dem offenen Ende angeordnet ist.

7.  Munition nach Anspruch 6, wobei das elektrisch isolierende Material Polytetrafluorethylen ist.

8.  Munition nach einem der vorangehenden Ansprüche, wobei die Löcher (44) im wesentlichen auf halber Länge der äußeren Elektrode (32) ausgebildet und regelmäßig um die der äußeren und der zentralen Elektrode gemeinsame Achse herum verteilt sind.

9.  Munition nach einem der vorangehenden Ansprüche, wobei die Enden der äußeren (32) und zentralen (30) Elektrode, welche dem offenen Ende gegenüberliegen, an einer elektrisch isolierenden Sondenhalterung (36) befestigt sind, die von zwei elektrischen Verbindungsdrähten (46) durchsetzt ist, welche zwei Klemmen bzw. Anschlüsse eines elektrischen Verbinders (48) mit der äußeren und der zentralen Elektrode verbinden.

10. Munition nach einem der vorangehenden Ansprüche, außerdem umfassend eine elektronische Schaltung, die eine Wechselspannungsquelle (50) sowie Mittel (52) zum Messen von Strom aufweist, die in Reihe zwischen die äußere (32) und zentrale (30) Elektrode der Sonde (26) geschaltet sind.

11. Munition nach Anspruch 10, wobei die Wechselspannungsquelle (50) eine einphasige Spannung von 19,8 Veff mit einer Frequenz von 400 Hz liefert.

12. Munition nach einem der Ansprüche 10 oder 11, wobei die Wechselspannungsquelle einen Transformator (50) aufweist.

FIG.1

FIG. 2

EP 0 893 687 B1